# EUROPEAN PATENT APPLICATION

(11) **EP 1 772 793 A1**
(43) Date of publication of application: **11.04.2007**
(21) Application number: 06254886.2
(22) Date of filing: 21.09.2006
(51) Int. Cl.: G05G 19/00

(54) **Simulation apparatus**

(30) Priority: 06.10.2005 JP 2005293848
(71) Applicant: FANUC LTD, Minamitsuru-gun, Yamanashi 401-0597 (JP)
(72) Inventor: Onishi, Yasushi, Fujiyoshida-shi, Yamanashi 403-0005 (JP); Maruyama, Toyokazu, c/o FANUC Manshonharimomi, Minamitsuru-gun, Yamanashi 401-0511 (JP)
(74) Representative: Billington, Lawrence Emlyn

(57) **Abstract**

A simulation apparatus includes means for simulating a numerical control function, means for simulating a sequence control, means for simulating an interactive type programming function, and means for simulating a machine tool and further an intermediating software execution means for intermediating transmission and reception of simulation input/output data between the respective execution means connected to them.

## Description

### BACKGROUND OF THE INVENTION

### 1. Field of the Invention

The present invention relates to a simulation apparatus which simulates the operation of a numerical control apparatus and the like that executes both a numerical control and a sequence control and which executes simulation softwares for different function portions in a common target.

### 2. Description of the Related Art

A numerical control apparatus and the like comprise a numerical control unit for executing a numerical control and a sequence control unit for executing a sequence control, and the numerical control unit and the sequence control unit control a machine tool and the like in cooperation with each other. The simulation apparatus for the numerical control apparatus in which the control units having a different function control a control target in cooperation with each other, comprises a simulation software execution means for each unit having different function.

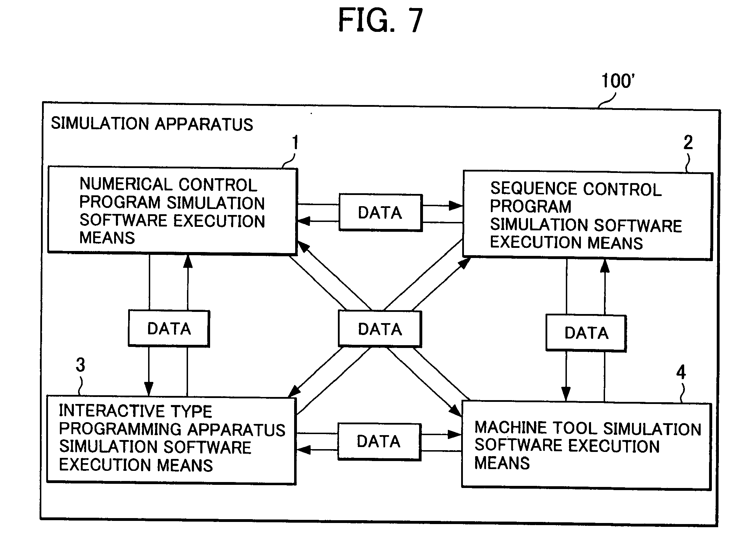

Fig. 7 shows a conventional example of a simulation apparatus and an example of a simulation apparatus 100' relating to the numerical control of a machine tool. The simulation apparatus 100' comprises a numerical control program simulation software execution means 1 for executing simulation of a numerical control function portion, a sequence control program simulation software execution means 2 for executing simulation of a sequence control, an interactive type programming apparatus simulation software execution means 3 for executing simulation of an interactive type programming function, and a machine tool simulation software execution means 4 for executing simulation of a machine tool.

The respective simulation software execution means 1 to 4 transmit and receive simulation input/output data between them and other simulation software execution means. For example, the numerical control program simulation software execution means 1 directly transmits and receives the simulation input/output data to and from the sequence control program simulation software execution means 2, the interactive type programming apparatus simulation software execution means 3, and the machine tool simulation software execution means 4. This is the same as to other simulation software execution means.

The conventional simulation apparatus directly transmits and receives the simulation input/output data between the respective simulation software execution means as described above. Accordingly, when a new type of a simulation software execution means is added, the existing simulation software execution means must be newly provided with means for transmitting and receiving the simulation input/output data between them and the added simulation software execution means. As a result, the overall system of the simulation apparatus must be reviewed and reconstructed.

Further, even for a target which need not be simulated by all the simulation software execution means, it is necessary to set all the simulation software execution means such that they execute simulation, so that a manipulation is made complex.

### SUMMARY OF THE INVENTION

Accordingly, an object of the present invention is to provide a simulation apparatus which allows easy expansion of function and easy maintenance, and further to provide a simulation apparatus that can execute only simulation of a necessary function.

A simulation apparatus according to the present invention is composed of a simulation software execution means for executing plural types of simulation software each having a different simulating portion with regard to a common target, and an intermediating means for intermediating transmission and reception of simulation input/output data between the respective simulation software execution means.

The intermediating means may receive a command or a command and data together with the information of a transfer source and a transfer destination from the simulation software execution means, transmits the command or the command and data together with the received information of the transfer source and the transfer destination to the transfer destination, and intermediates the data between the simulation software execution means.

The intermediating means may include a selective activation means for making the respective executions of the plural types of the simulation software execution means valid or invalid. Further, the simulation apparatus may includes a pseudo simulation software execution means for executing pseudo simulation software in association with the respective simulation software execution means, and the intermediating means may transmit and receive the input/output data from the pseudo simulation software execution means in place of the simulation input/output data of the simulation software execution means whose execution is made invalid by the selective activation means.

The plural types of the simulation software execution means may be, for example, a simulation software execution means for simulating the operation of a numerical control program of a numerical control apparatus, a simulation software execution means for simulating the operation of a sequence control program for controlling the operation of a machine tool or peripheral equipment, an simulation software execution means for simulating the operation of a machine tool controlled by a numerical control apparatus, and a simulation software execution means for simulating an interactive type programming apparatus of a numerical control apparatus.

Since the present invention comprises the above configurations, a new type of a simulation software execution means can be added only by providing it with interface for transmitting and receiving simulation input/output data between it and the intermediating means. As a result, expansion of the function of the simulation apparatus and maintenance of the simulation apparatus can be easily executed.

Further, the intermediating means can cause the simulation software execution means to stop execution of unnecessary simulation software execution means and transmission and reception of simulation input/output data. As a result, setting and manipulation for selecting a target to be simulated can be simply executed.

### BRIEF DESCRIPTION OF THE DRAWINGS

The objects described above, further objects, and advantages of the present invention will become apparent from the description of the following embodiments with reference to attached drawings, wherein:
Fig. 1 is a function block diagram of a simulation apparatus of a first embodiment of the present invention;
Fig. 2 is a function block diagram of a simulation apparatus of a second embodiment of the present invention;
Fig. 3 is a function block diagram of a simulation apparatus of a third embodiment of the present invention;
Fig. 4 is a block diagram of a main portion of the simulation apparatuses shown in Figs. 1 to 3;
Fig. 5 is a flowchart showing an operation processing of a signal transmitted and received between a numerical control program simulation software execution means and sequence control program simulation software execution means;
Fig. 6 is a flowchart showing an operation processing of a machining program transmitted and received when a machining program is edited by an interactive type programming apparatus simulation software execution means for update; and
Fig. 7 is a function block diagram of a conventional simulation apparatus for executing simulation software for different portions in a common target.

### DETAILED DESCRIPTION OF THE PREFERRED EMBODIMENTS

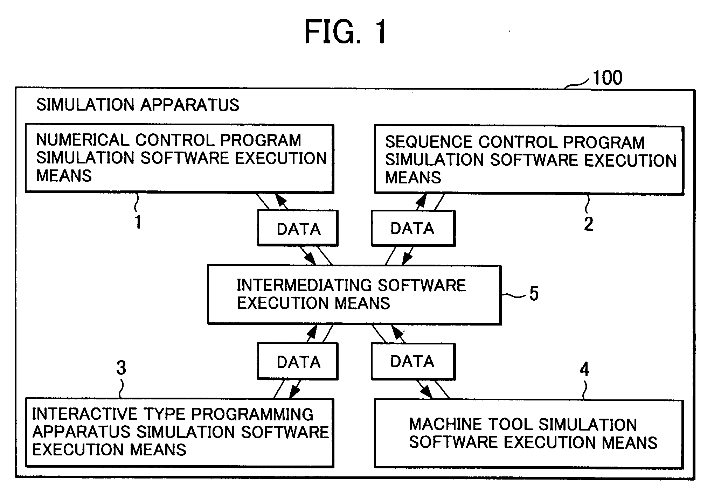

Fig. 1 is a function block diagram of a simulation apparatus 100 of a first embodiment of the present invention.

The simulation apparatus 100 includes a numerical control program simulation software execution means 1 for executing simulation of a numerical control function, a sequence control program simulation software execution means 2 for executing simulation of a sequence control, an interactive type programming apparatus simulation software execution means 3 for executing simulation of an interactive type programming function, a machine tool simulation software execution means 4 for executing simulation of a machine tool, likewise the conventional simulation apparatus 100' shown in Fig. 7, and further an intermediating software execution means 5 connected to the respective simulation software execution means 1 to 4 for intermediating the transmission and reception of simulation input/output data between the respective simulation software execution means 1 to 4 connected to it.

The respective simulation software execution means 1 to 4 transfer the information of a "transfer source" from which signals such as a command, data, and the like are output, the information of a "transfer destination" for designating a destination for receiving the signals, and a "command" (in addition to it, "data" when necessary) to the intermediating software execution means 5 as the simulation input/output data. The intermediating software execution means 5 transfers the simulation input/output data of the received "transfer source" and "command" (and further the "data") to the simulation software execution means designated by the "transfer destination".

Further, on receiving the simulation input/output data, the simulation software execution means 1 to 4 execute a simulation processing based on the received "command" (further, on the "data").

Next, the simulation software execution means 1 to 4 and the intermediating software execution means 5 execute the above operations, respectively.

Since the simulation input/output data is transmitted and received between the simulation software execution means through the intermediating software execution means 5, when a new type of a simulation software execution means is added, it is only required to establish interface between the added simulation software execution means and the intermediating software execution means 5. As a result, a simulation software execution means can be added simply.

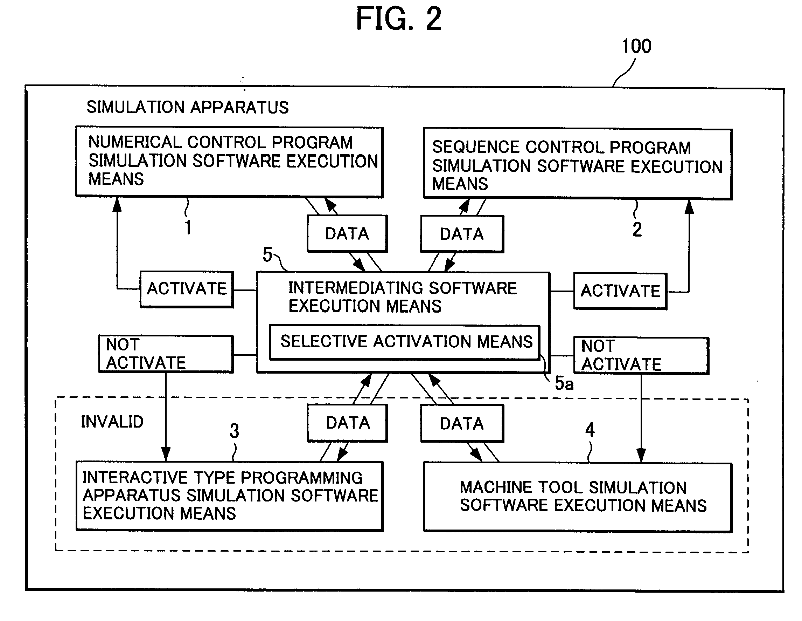

Fig. 2 is a function block diagram of a simulation apparatus 100 of a second embodiment of the present invention. The embodiment is different from the first embodiment (Fig. 1) in that it is provided with a selective activation means for selecting means for executing simulation and means for not executing simulation, from among various types of the simulation software execution means 1 to 4. In the second embodiment, the selective activation means 5a is disposed in an intermediating software execution means 5.

In the first embodiment shown in Fig. 1, all the simulation software execution means 1 to 4 are activated. However, in the second embodiment, only the simulation software execution means selected and set by the selective activation means 5a are activated. Thus, a target to be simulated can be selected by simple setting and manipulation in the case of this embodiment.

In the example shown in Fig. 2, a numerical control program simulation software execution means 1 and a sequence control program simulation software execution means 2 are operated, but, an interactive type programming apparatus simulation software execution means 3 and a machine tool simulation software execution means 4 are selected so as not to be activated.

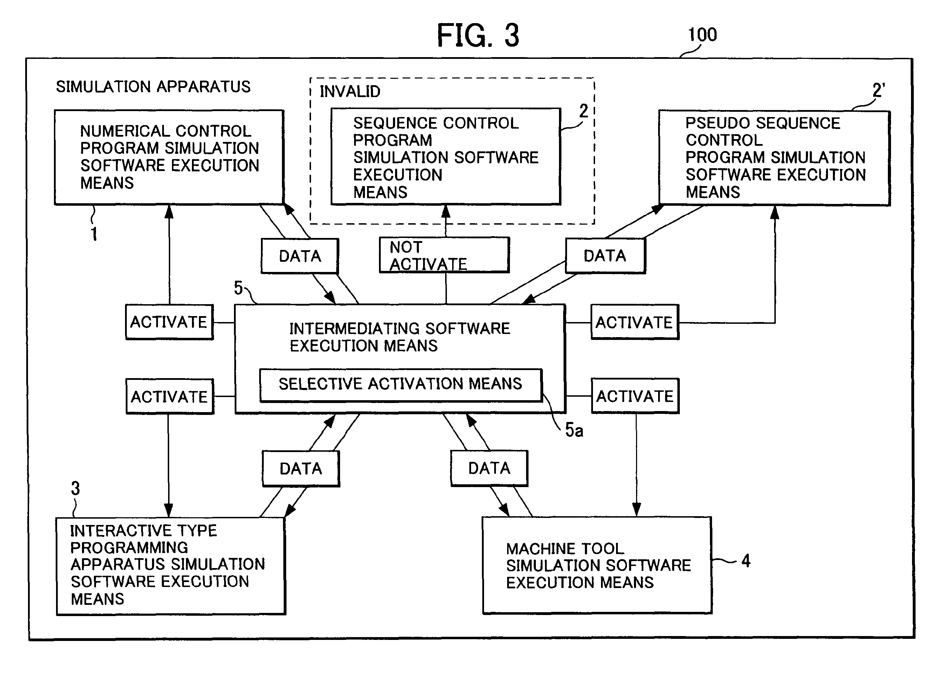

Fig. 3 is a function block diagram of a simulation apparatus 100 of a third embodiment of the present invention. The third embodiment corresponds to the simulation apparatus of the second embodiment to which a pseudo simulation software execution means is added. That is, the third embodiment corresponds to a simulation apparatus comprising a numerical control program simulation software execution means 1, a sequence control program simulation software execution means 2, an interactive type programming apparatus simulation software execution means 3, and a machine tool simulation software execution means 4, shown in Fig. 2, to which the pseudo simulation software execution means is added.

The pseudo simulation software execution means is arranged to simulate a processing in which simulation input/output data must be transmitted and received between the simulation software execution means 1 to 4. For simulation software execution means which have not been selected, corresponding pseudo simulation software execution means executes pseudo simulation software, thereby allowing the simulation input/output data to be transmitted and received between the above simulation software execution means and other simulation software execution means.

In the example shown in Fig. 3, when the sequence control program simulation software execution means 2 is not selected, a pseudo sequence control program simulation software execution means 2', which corresponds to the sequence control program simulation software execution means 2, is activated in place of it so that the simulation input/output data is transmitted and received between the pseudo sequence control program simulation software execution means 2' and the intermediating software execution means 5.

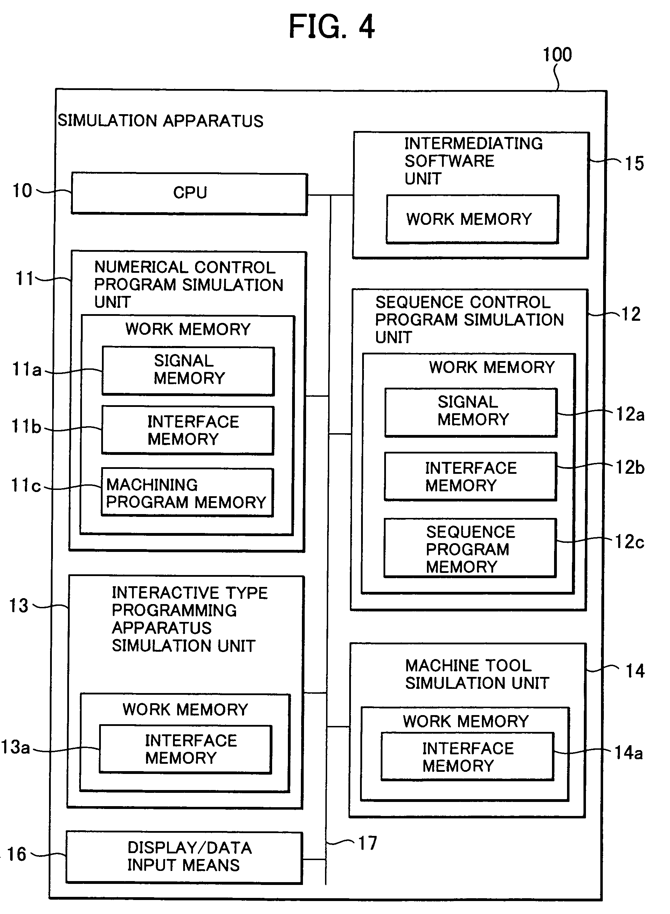

Fig. 4 is a block diagram of a main portion of the simulation apparatus 100 for executing the respective embodiments described above.

A processor (CPU) 10 for controlling the whole of the simulation apparatus 100 is connected to a numerical control program simulation unit 11, a sequence control program simulation unit 12, an interactive type programming apparatus simulation unit 13, a machine tool simulation unit 14, and an intermediating software unit 15 through a bus 17. These simulation units 11 to 14 constitute the simulation software execution means 1 to 4, respectively, and further the intermediating software unit 15 constitutes the intermediating software execution means 5.

Further, a display/data input means 16 composed of a display, a keyboard and the like is connected to the bus 17.

The numerical control program simulation unit 11, the sequence control program simulation unit 12, the interactive type programming apparatus simulation unit 13, and the machine tool simulation unit 14 store software for simulating the functions of them, and further the intermediating software unit 15 stores software for transmitting and receiving the simulation input/output data.

Further, a work memory disposed in the numerical control program simulation unit 11 includes a signal memory 11a for storing a signal that is transmitted and received between the numerical control program simulation unit 11 and the sequence control program simulation software execution means 2, an interface memory 11b for storing interface for transmitting and receiving the simulation input/output data between the numerical control program simulation unit 11 and the intermediating software execution means 5, and a machining program memory 11c for storing a machining program as a target of simulation.

A work memory disposed in the sequence control program simulation unit 12 includes a signal memory 12a for storing a signal that is transmitted and received between the sequence control program simulation unit 12 and the numerical control program simulation software execution means 1, an interface memory 12b for storing an interface for transmitting and receiving the simulation input/output data between the sequence control program simulation unit 12 and the intermediating software execution means 5, and a sequence program memory 12c for storing a sequence program.

A work memory of the interactive type programming apparatus simulation unit 13 and a work memory of the machine tool simulation unit 14 include interface memories 13a, 14a for transmitting and receiving the simulation input/output data between these units 13, 14 and the intermediating software execution means 5, respectively.

The numerical control program simulation software execution means 1, the sequence control program simulation software execution means 2, the interactive type programming apparatus simulation software execution means 3, the machine tool simulation software execution means 4, and the intermediating software execution means 5 are composed of the numerical control program simulation unit 11, the sequence control program simulation unit 12, the interactive type programming apparatus simulation unit 13, the machine tool simulation unit 14, the intermediating software unit 15, and the processor 10 described above, respectively.

Further, the intermediating software unit 15 stores software for selecting a simulation software execution means to be activated based on an input from the display/data input means 16 for setting a simulation software execution means valid or invalid. The selective activation means 5a is composed of the intermediating software unit 15, the display/data input means 16 and the processor 10.

Next, the operation of the simulation apparatus arrange as described above will be explained as to an example in which simulation input/output data is transmitted and received between the numerical control program simulation software execution means 1 and the sequence control program simulation software execution means 2.

A signal is transmitted and received between the numerical control program simulation software execution means 1 and the sequence control program simulation software execution means 2 at regular intervals. An F address is set to a request signal from the numerical control program simulation software execution means 1 to the sequence control program simulation software execution means 2, and a G address is set to a request signal from the sequence control program simulation software execution means 2 to the numerical control program simulation software execution means 1.

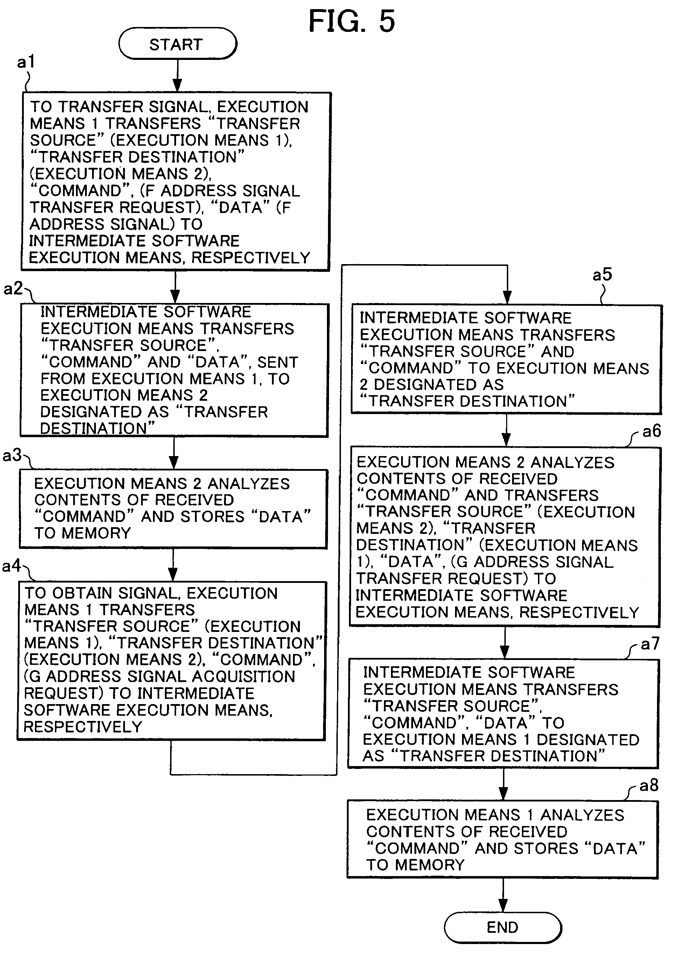

There will be explained, with reference to a flowchart of Fig. 5, a processing in which the sequence control program simulation software execution means 2 stores the F address signal received from the numerical control program simulation software execution means 1 in the signal memory 12a, and then the numerical control program simulation software execution means 1 sends a signal (simulation input/output data) for requesting the sequence control program simulation software execution means 2 to transfer the G address signal.

When the numerical control program simulation software execution means 1 sends the signal (simulation input/output data) to other simulation software execution means, it outputs the information of itself (numerical control program simulation software execution means 1) as "transfer source", the information of the simulation software execution means of the "transfer destination" to which the signal is intended to be transferred, the "command", and the "data". In the example, the numerical control program simulation software execution means 1 sends the information of the sequence control program simulation software execution means 2 as "transfer destination", an F address signal transfer request as "command", and the F address signal as "data" to the intermediating software execution means 5 respectively (step a1).

The intermediating software execution means 5 transfers the "transfer source", the "command" and the "data", received from the numerical control program simulation software execution means 1, to the simulation software execution means designated as "transfer destination". In this example, the intermediating software execution means 5 transfers the "transfer source", the "command" and the "data" to the sequence control program simulation software execution means 2 (step a2).

The sequence control program simulation software execution means 2 analyzes the contents of the information of the "command", from among the "transfer source", the "command", and the "data" which have been transferred from the intermediating software execution means 5, and stores the "data" to the signal memory 12a (step a3).

When the numerical control program simulation software execution means 1 receives the signal (simulation input/output data) from the other simulation software execution means, it sends the information of itself (numerical control program simulation software execution means 1) as "transfer source" and the information of the simulation software execution means to which it intends to transfer a signal to the intermediating software execution means 5 as "transfer destination". In the example, the sequence control program simulation software execution means 2 is designated as "transfer destination". Further, the numerical control program simulation software execution means 1 transfers a G address signal acquisition request to the intermediating software execution means 5 as "command" (step a4).

The intermediating software execution means 5 transfers the "transfer source" and the "command", received from the numerical control program simulation software execution means 1, to the sequence control program simulation software execution means 2 designated as "transfer destination" (step a5).

After the sequence control program simulation software execution means 2 analyzes the information of the "command" received from the numerical control program simulation software execution means 1, it transfers to the intermediating software execution means 5, the information of the numerical control program simulation software execution means 1, received as "transfer source", as "transfer destination ", the information of itself (sequence control program simulation software execution means 2) as "transfer source", a G address transfer request as "command", and a G address signal as "data", respectively (step a6).

The intermediating software execution means 5 transfers the received "transfer source", "command" and "data" to the numerical control program simulation software execution means 1 designated as "transfer destination" (step a7).

After the numerical control program simulation software execution means 1 analyzes the contents of the "command" transferred from the intermediating software execution means 5, it stores "data" to the signal memory 11a. In this way, a series of transmission and reception of the signal between the numerical control program simulation software execution means 1 and the sequence control program simulation software execution means 2 is completed (step a8).

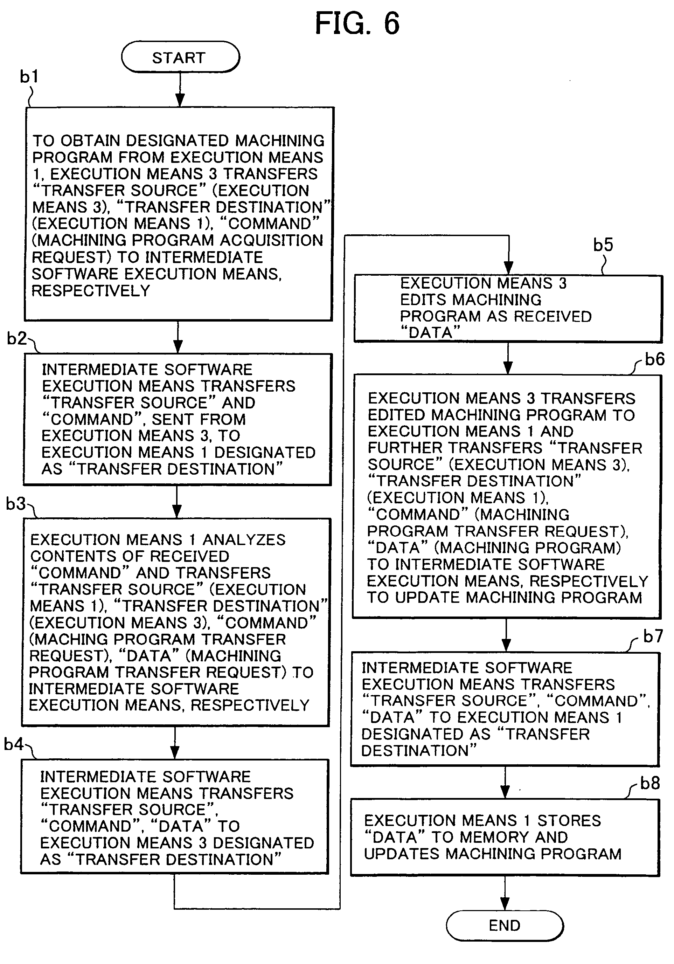

Next, a processing for editing the machining program stored in the machining program memory 11c of the numerical control program simulation unit 11 by means of the interactive type programming apparatus simulation software execution means 3 and updating the machining program will be explained with reference to a flowchart of Fig. 6.

To obtain the machining program to be edited from the numerical control program simulation software execution means 1, the interactive type programming apparatus simulation software execution means 3 sends to the intermediating software execution means 5 the information of itself (interactive type programming apparatus simulation software execution means 3) as "transfer source", the information of the numerical control program simulation software execution means 1 as "transfer destination" and a machining program acquisition request as "command", respectively (step b1).

The intermediating software execution means 5 transfers "transfer source" and the "command", received from the interactive type programming apparatus simulation software execution means 3, to the numerical control program simulation software execution means 1 designated as "transfer destination" (step b2).

After the numerical control program simulation software execution means 1 analyzes the contents of the information of the "command" received from the intermediating software execution means 5, it transfers to the intermediating software execution means 5, the information of the interactive type programming apparatus simulation software execution means 3, received as "transfer source", as "transfer destination", the information of itself (the numerical control program simulation software execution means 1) as "transfer source", a machining program transfer request as "command", and the machining program as "data", respectively (step b3).

The intermediating software execution means 5 transfers the received "transfer source", "command" and "data" to the interactive type programming apparatus simulation software execution means 3 designated as "transfer destination", respectively (step b4).

The interactive type programming apparatus simulation software execution means 3 edits the machining program received from the intermediating software execution means 5 (step b5).

The interactive type programming apparatus simulation software execution means 3 transfers the edited machining program to the numerical control program simulation software execution means 1. Further, to update the machining program, the interactive type programming apparatus simulation software execution means 3 designates the information of itself (interactive type programming apparatus simulation software execution means 3) as "transfer source" and the numerical control program simulation software execution means 1 as "transfer destination" and transfers a machining program transfer request as "command" and the edited machining program as "data" to the intermediating software execution means 5, respectively (step b6).

The intermediating software execution means 5 transfers the received the "transfer source", the "command" and "data" to the numerical control program simulation software execution means 1 designated as "transfer destination" (step b7).

The numerical control program simulation software execution means 1 stores the "data", received from the intermediating software execution means 5, in the machining program memory 11c and updates the machining program (step b8).

The operation processing for editing the machining program by the interactive type programming apparatus simulation software execution means 3 and updating it is as described above.

As described above, the respective simulation software execution means transfers to the intermediating software execution means 5, the information of simulation software execution means which sends a signal (simulation input/output data), as "transfer source", the information of simulation software execution means to which the signal is transferred, as "transfer destination", and "command" (in addition to it, "data" when necessary), respectively. The intermediating software execution means 5 transfers the received "transfer source" and "command" (and further the "data") to the simulation software execution means designated as "transfer destination". On receiving the transferred signal, the simulation software execution means executes a processing based on the "command". The above operation is repeatedly executed.

When a new type of a simulation software execution means is added, it is sufficient to provide the simulation software execution means with an interface to the intermediating software execution means 5 without modifying the existing simulation software execution means at all. As a result, the new type of the simulation software execution means can be simply added.

Note that, in the second embodiment shown in Fig. 2, it is sufficient to set the simulation software execution means, which need not be simulated (for example, the interactive type programming apparatus simulation software execution means 3 and the machine tool simulation software execution means 4, as shown in Fig. 2,), invalid by an input from the display/data input means 16 so that the invalid simulation software execution means is not activated. An operation processing in this point is omitted.

Further, in the third embodiment shown in Fig. 3, for the invalid simulation software execution means (for example, in the example shown in Fig. 3, the sequence control program simulation software execution means 2), pseudo simulation software execution means (in the example shown in Fig. 3, the pseudo sequence control program simulation software execution means 2') for executing simple pseudo simulation is activated so that the simulation input/output data is transmitted and received. In this case, in the operation processing flowcharts of Figs. 5 and 6, it is only necessary to replace the invalid simulation software execution means with the pseudo simulation software execution means.

## Claims

1. A simulation apparatus comprising:
simulation software execution means for executing a plurality of types of simulation software each having a different simulating portion with respect to a common target; and
intermediating means for intermediating transmission and reception of simulation input/output data between the respective simulation software execution means.

2. The simulation apparatus according to claim 1, wherein the intermediating means receives a command or a command and data together with the information of a transfer source and a transfer destination from the simulation software execution means, transmits the command or the command and data together with the received information of the transfer source and the transfer destination to the transfer destination, and intermediates the data between the simulation software execution means.

3. The simulation apparatus according to claim 1, wherein the intermediating means comprises selective activation means for making the respective executions of the plurality of types of the simulation software execution means valid or invalid.

4. The simulation apparatus according to claim 3, further comprising pseudo simulation software execution means for executing pseudo simulation software in association with the respective simulation software execution means,
wherein the intermediating means transmits and receives the input/output data from the pseudo simulation software execution means in place of the simulation input/output data of the simulation software execution means whose execution is made invalid by the selective activation means.

5. The simulation apparatus according to claim 1, wherein one type of the plurality of types of the simulation software execution means is simulation software execution means for simulating the operation of a numerical control program of a numerical control apparatus.

6. The simulation apparatus according to claim 1, wherein one type of the plurality of types of the simulation software execution means is simulation software execution means for simulating the operation of a sequence control program for controlling the operation of a machine tool or peripheral equipment.

7. The simulation apparatus according to claim 1, wherein one type of the plurality of types of the simulation software execution means is simulation software execution means for simulating the operation of a machine tool controlled by a numerical control apparatus.

8. The simulation apparatus according to claim 1, wherein one type of the plurality of types of the simulation software execution means is simulation software execution means for simulating an interactive type programming apparatus of a numerical control apparatus.
